Europäisches Patentamt

European Patent Office

Office européen des brevets

(11) Veröffentlichungsnummer: **0 379 079 B2**

(12) **NEUE EUROPÄISCHE PATENTSCHRIFT**

(45) Veröffentlichungstag der neue Patentschrift:
**22.11.95**

(51) Int. Cl.⁶: **G01B 11/24**

(21) Anmeldenummer: **90100588.4**

(22) Anmeldetag: **12.01.90**

(54) **- Vorrichtung zur Vermessung der Oberfläche eines Objektes mittels Projektion von Streifenmustern.**

(30) Priorität: **17.01.89 CH 140/89**

(43) Veröffentlichungstag der Anmeldung:
**25.07.90 Patentblatt 90/30**

(45) Bekanntmachung des Hinweises auf die Patenterteilung:
**11.03.92 Patentblatt 92/11**

(45) Bekanntmachung des Hinweises auf die Entsheidung über den Einspruch:
**22.11.95 Patentblatt 95/47**

(84) Benannte Vertragsstaaten:
**DE FR GB IT SE**

(56) Entgegenhaltungen:
**EP-A- 0 262 089**
**EP-A- 0 288 983**
**DE-A- 3 328 753**
**GB-A- 2 204 397**
**US-A- 4 687 325**

**ISPRS-Vortrag "Automated Fast Shape Determination of Diffuse Reflecting Objects at Close Range by Means of Structured Light and Digital Phase Measurement" presented to ISPRS Intercommission Conference on "Fast Processing of Photogrammetric Data", Interlaken, 2. - 4. Juni 1987, Seiten 363-379**

**H. Naumann, G. Schröder, "Bauelemente der Optik: Taschenbuch für Konstrukteure", Carl Hanser Verlag München Wien, 1983, Seiten 559-563**

(73) Patentinhaber: **Leica AG**

**CH-9435 Heerbrugg (CH)**

(72) Erfinder: **Zumbrunn, Roland**
**Hympelrainweg 5**
**CH-4443 Wittinsburg (CH)**
Erfinder: **Richner, Linus**
**Kirchgasse 26**
**CH-5742 Kölliken (CH)**

(74) Vertreter: **Stamer, Harald, Dipl.-Phys.**
**c/o Leica Industrieverwaltung GmbH,**
**Konzernstelle Patente + Marken,**
**Postfach 20 20**
**D-35530 Wetzlar (DE)**

EP 0 379 079 B2

EP 0 379 079 B2

**Beschreibung**

Die Erfindung betrifft eine Vorrichtung zur Vermessung der Oberfläche eines Objektes mit - Mitteln zur Beleuchtung des Objektes mit einem Lichtbündel mit über dessen Querschnitt periodisch variierender Helligkeitsverteilung, - Mitteln zur Modulation der Phasen der Helligkeitsverteilung des Lichtbündels zur Beleuchtung an den zu vermessenden Objektpunkten, - einer lichtelektrischen Detektoranordnung zur Erfassung und Speicherung der Helligkeitswerte der beleuchteten Objektpunkte für eine Anzahl unterschiedlicher Modulationsphasen und Periodenlängen des Lichtbündels zur Beleuchtung und mit - Mitteln zur Verknüpfung der erfassten Helligkeitswerte zur Ermittlung der Restphasenwerte der beleuchteten Objektpunkte innerhalb der Perioden der Helligkeitsverteilung für definierte Phasenlagen der Verteilungen gegenüber den Mitteln zur Beleuchtung, sowie zur Ermittlung der Höhen der Punkte der Objektoberfläche bezüglich einer Referenzebene.

Vorrichtungen zur kontaktlosen Vermessung von Oberflächenprofilen von Objekten sind bekannt. Dabei wird ein periodisches Streifenmuster auf die zu vermessende Oberfläche projiziert, und ein durch die Form der Oberfläche deformiertes Streifenbild wird ausgewertet, um die Höhen der einzelnen Punkte der Objektoberfläche gegenüber einer Referenzebene zu berechnen. Zur Erzeugung des Streifenmusters sind verschiedene Methoden bekannt. Gemäss C.L. Koliopoulos: "Interferometric Optical Phase Measurement Techniques" (Dissertation, Univ. of Arizona, 1981) werden die Streifenmuster mit einem Mirau-Interferometer oder mit einem Twyman-Green Interferometer erzeugt. Die Streifenbreite oder die Periodenlänge des Streifenmusters ist hierbei im wesentlichen durch die Wellenlänge des zur Beleuchtung verwendeten Lichtes und die Stellung des Referenzspiegels bestimmt. Gemäss EP-A-182 469 (M.Halioua, V.Srinivasan, 1986) werden die Streifenmuster mit einem Shearing-Interferometer oder durch Projektion eines Sinusgitters erzeugt. Die Periodenlänge kann dabei durch Einstellung des Scherwinkels oder durch Wahl eines entsprechenden Sinusgitters bestimmt werden. Die Periodenlänge des Streifenmusters bestimmt im Wesentlichen die Tiefenauflösung der Oberflächenmessung.

Bei den genannten Vorrichtungen ergibt sich ein besonderes Problem dadurch, dass man zwar die Höhen der einzelnen Objektpunkte innerhalb eines Streifens des projizierten Musters bezüglich der Unterkante dieses Streifens gut bestimmen kann, dass es jedoch schwieriger ist, die Absoluthöhe der Objektpunkte bezüglich einer im Raume fest liegenden Referenzebene zu ermitteln. Hierzu muss man i.A. eine grosse Anzahl von Streifen auszählen, welche den jeweiligen Objektpunkt von dieser Referenzebene trennt.

Aufgabe der Erfindung ist es, eine Vorrichtung zur Vermessung der Oberfläche eines Objektes zu finden, welche eine vereinfachte Bestimmung der Absoluthöhe von Objektpunkten bezüglich einer im Raum festliegenden Referenzebene erlaubt.

Diese Aufgabe wird bei einer Vorrichtung der eingangs genannten Art dadurch gelöst, dass - die Mittel zur Beleuchtung und zur Modulation mehrere lineare Strichgitter mit unterschiedlichen Periodenlängen umfassen, welche im Lichtbündel auf einem gemeinsamen Träger angeordnet sind, dass - auf dem gemeinsamen Träger mindestens eine weitere Teilung angeordnet ist, welche Referenzmarken umfasst und bezüglich welcher die linearen Strichgitter definierte Phasenlagen aufweisen und dass - Mittel zur definierten Verschiebung des gemeinsamen Trägers und zur Abtastung der weiteren Teilung vorgesehen sind, welche erlauben, die linearen Strichgitter so im Lichtbündel zu verschieben, dass die entsprechenden Helligkeitsverteilungen bezüglich der Objektoberfläche die erforderlichen definierten Phasenlagen aufweisen. Vorteilhafte Weiterbildungen sind Gegenstand der Unteransprüche.

Ein Ausführungsbeispiel der Erfindung wird im Folgenden anhand der Figuren der Zeichnung beschrieben. Es zeigen :

Fig. 1 das Gesamtschema einer Anordnung zur Vermessung der Oberfläche eines Objektes,

Fig. 2 mehrere lineare Strichgitter mit unterschiedlichen Periodenlängen auf einem gemeinsamen Träger und

Fig. 3 ein Blockschema einer elektrischen Steuer- und Auswerteschaltung für die Anordnung gemäss Fig. 1.

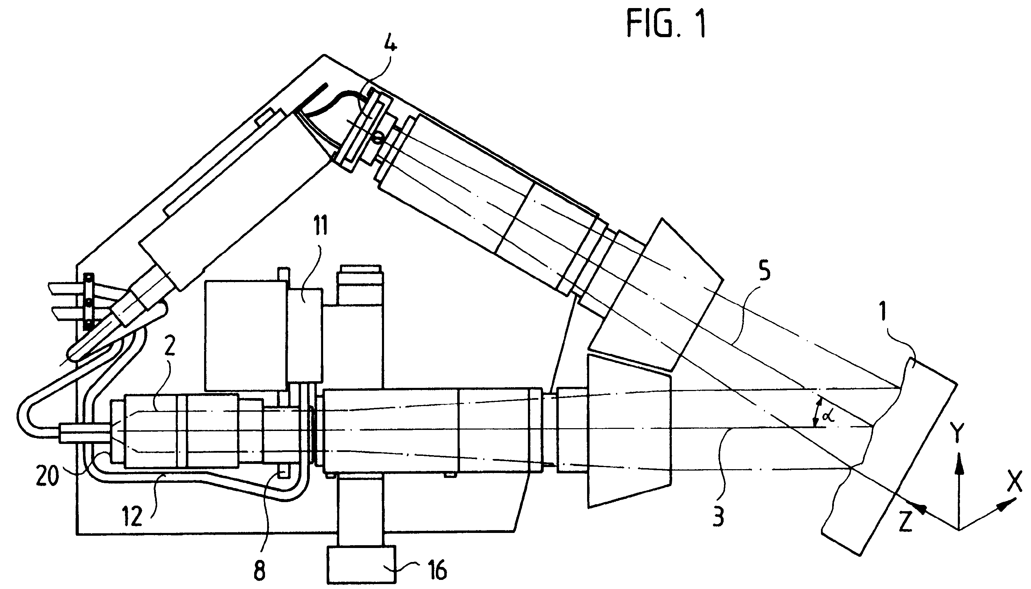

Wie in Fig. 1 dargestellt, wird die Oberfläche 1 eines Objektes durch das Licht eines Projektors 2 mit der optischen Achse 3 beleuchtet und von einer lichtelektrischen Detektoranordnung Kamera 4 mit der optischen Achse 5 aufgenommen.

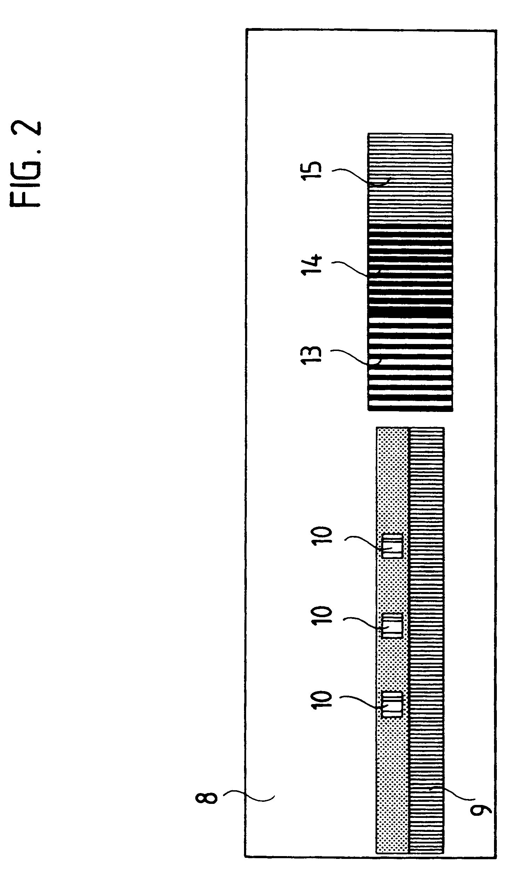

Wie in gebrochenen Linien gezeigt, wird das Lichtbündel einer lichtemittierenden Diode 20 im Projektor 2 zunächst durch eine Sammeloptik parallel gerichtet. Dieses Lichtbündel beleuchtet dann mehrere lineare optische Strichgitter, welche sich auf einem transparenten Teilungsträger 8 befinden. Wie Fig.2 zeigt, sind diese Strichgitter alle zueinander parallel orientiert. Ein langes Gitter 9 mit daneben angeordneten Nullmarken 10 hat eine relativ kleine Periodenlänge und dient in an sich bekannter Art dazu, die Lage des in einer

2

am Projektor 2 befestigten Führung verschieblichen Teilungsträgers 8 zu messen. Zu diesem Zweck ist der Gitterteilung 9 ein lichtelektrisches Abtastsystem 11 zugeordnet, dessen Ausgangssignale über eine Leitung 12 einer Auswerteeinrichtung zugeführt sind. Die Leitung 12 dient gleichzeitig der Stromversorgung des Abtastsystems 11.

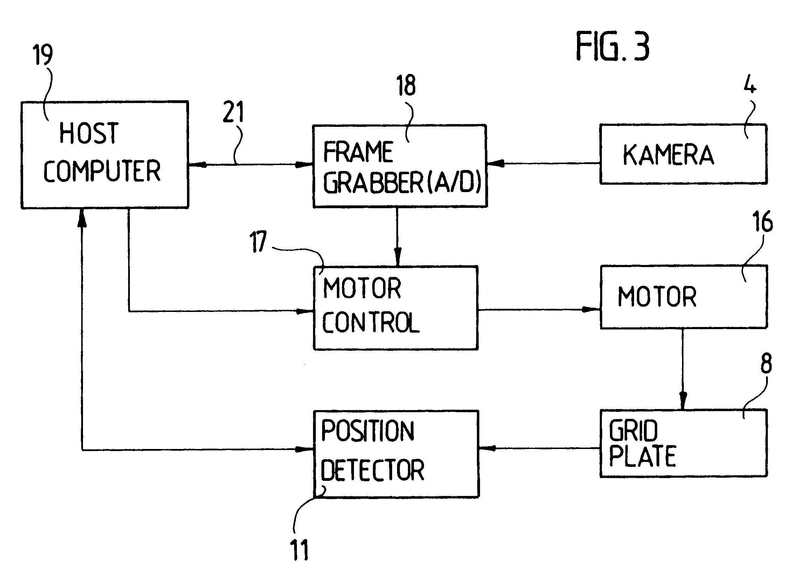

Neben dem Gitter 9 sind drei weitere Gitter 13, 14, 15 angeordnet, welche auf die Oberfläche 1 des zu vermessenden Objektes projiziert werden. Die Teilungen dieser drei Ronchi-Gitter 13, 14, 15 bestehen aus gleichbreiten geradlinigen Strichen und Lücken, wobei die Periodenlänge von Gitter 13 1,26 mm, jene von Gitter 14 1,12 mm und jene von Gitter 15 0,28 mm beträgt. Der Teilungsträger 8 ist über einen Befestigungswinkel in einer Parallelführung verschieblich. Die Verschiebung erfolgt über einen Schrittmotor 16, der über ein Kabel von einer Steuerstufe Motor Control 17 angetrieben wird, wie in Fig. 3 dargestellt. Sie wird mit dem Abtastsystem 11 und den Gitterteilungen 9, 10 gemessen. Nach Durchlaufen eines der Gitter 13, 14, oder 15 hat das Lichtbündel der Diode 20 eine über dessen Querschnitt periodisch variierende Helligkeitsverteilung. Dieses Lichtbündel wird durch zwei Optiken auf einen dem Objekt 1 entsprechenden Querschnitt aufgeweitet.

Die Objektoberfläche 1 wird also mit einem periodischen Streifenmuster beleuchtet, welches durch Seitenverschiebung des Teilungsträgers 8 nach rechts oder links verschieblich ist. Dabei ändert sich für alle Objektpunkte die Beleuchtungsphase periodisch, es liegt eine Phasenmodulation vor. Mittels der Nullmarken 10 kann man Referenzsignale erzeugen, wenn bestimmte Objektpunkte bestimmte Beleuchtungsphasen durchlaufen.

Die Auswertung der an der Objektoberfläche 1 deformierten Gitterbilder, die mit der Detektoranordnung Kamera 4 aufgenommen und in einer Auswerteelektronik Frame Grabber 18 (Fig.3) gespeichert werden, geschieht in an sich bekannter Weise, vgl. "Phasenshiftverfahren - Mehrbucketmethode", die eingangs genannte Literaturstelle von C. L. Koliopoulos (1981) und wird hier nur kurz zusammengefasst. Diese Auswertung erfolgt gemäss einem vorbestimmten Zeitablauf, der durch die Aufnahmenorm der Detektoranordnung Kamera 4 gegeben ist.

Wie oben erwähnt, ergeben sich durch Projektion der Streifengitter 13, 14, 15 auf der Objektoberfläche 1 periodisch variierende Helligkeitsverteilungen, welche sich durch eine periodische Rechteckfunktion I(t) approximieren lassen. Eine integrierende Wirkung der Kamera 4 für jedes Pixel lässt sich dann wie folgt darstellen, wobei sich 4 Bildsummen oder "Buckets" A, B, C, D ergeben:

**"Four Bucket Methode"**

$$A = (1/T) \int_{-T/8}^{T/8} I(t)\,dt \quad ; \quad B = (1/T) \int_{T/8}^{3T/8} I(t)\,dt$$

$$C = (1/T) \int_{3T/8}^{5T/8} I(t)\,dt \quad ; \quad D = (1/T) \int_{5T/8}^{7T/8} I(t)\,dt \ .$$

Während der 4 Zeitintervalle [-T/8; T/8], [T/8; 3T/8], [3T/8; 5T/8], [5T/8; 7T/8] wird das Streifenmuster mit konstanter Geschwindigkeit um insgesamt eine Periodenlänge lambda verschoben. Aus den Quotienten

$$M1/M2 = (B - D)/(A - C)$$

der gespeicherten Summen lassen sich dann die Beleuchtungsphasen phi jedes Pixels und daraus die Objektpunkthöhen berechnen.

Der Schrittmotor 16 wird durch den durch die Aufnahmenorm der Kamera 4 gegebenen Zeitablauf so gesteuert, dass während der Aufnahme der Bilder das Streifenbild auf dem Objekt 1 um 1/1 Periodenlänge verschoben wird. Die Detektoranordnung Kamera 4 umfasst einen CCD-Sensor mit mehr als 262 144 Einzelsensoren. Diese Einzelsensoren integrieren während der Bildverschiebung die einzelnen Bildpunktbeleuchtungen während je 20 ms, und lesen dann je ein Gesamtbild in einen Speicher der Auswerteelektronik Frame Grabber 18 aus (vgl.Fig.3).

Die von der Kamera 4 ausgegebenen Bilder werden Pixel für Pixel durch einen im Frame Grabber 18 befindlichen Analog-Digitalwandler (ADC) in digitales Signalformat gewandelt. Die resultierenden 8-bit Bildpixelwerte werden auf eine Addier/Subtrahierstufe übertragen. Zum Addieren oder Subtrahieren der einander entsprechenden Werte aufeinanderfolgender Bilder übernimmt die Addier/Subtrahierstufe die in den Speichern des Frame Grabbers 18 gespeicherten Werte und gibt nach der arithmetischen Operation die neuen Werte in die Speicher zurück.

Das Dividieren von im einen Speicher gespeicherten Bildsummen (B-D) durch im anderen Speicher gespeicherte Bildsummen (A-C) wird auf dem Frame Grabber 18 mit Hilfe von "Look-up-Tables" (LUT) ausgeführt. Beide Bildsummen werden zuerst mittels der LUT logarithmiert, und die Logarithmen werden anschliessend voneinander subtrahiert. Mittels einer weiteren LUT wird dann von der resultierenden Differenz wieder der Antilogarithmus und von diesem die Funktion (arc tan) gebildet.

Während der Aufnahmezeit werden also 16 Gesamtbilder aufgenommen. Dabei werden je 4 Bilder zu einer Bildsumme zusammengefasst, sodass sich die 4 Bildsummen A, B, C, D ergeben. Diese Bildsummen werden nach einer Analog-Digital-Wandlung in zwei im Frame Grabber 18 befindliche 262 144-fach Speicher M1, M2 wie folgt aufsummiert:

Bild 1 bis Bild 4 in M2 aufsummiert, ergeben Bildsumme A, danach

Bild 5 bis Bild 8 in M1 aufsummiert, ergeben Bildsumme ( + B), danach

Bild 9 bis Bild 12 von M2 subtrahiert, ergeben Bildsumme (A - C), danach

Bild 13 bis Bild 16 von M1 subtrahiert, ergeben Bildsumme (B - D).

Durch die bereits beschriebene Division der Speicherwerte

$$M1/M2 \; = \; (B \text{ - } D)/(A \text{ - } C),$$

erhält man 262 144 Werte für die 262 144 Bildpunkte, aus denen die Objektpunkthöhen berechnet werden. Im Einzelnen bildet man für alle Werte aus M1 log(M1), speichert diese wieder in M1, bildet für alle Werte aus M2 log(M2), speichert diese wieder in M2, bildet die Differenz der Speicherwerte M1 - M2, speichert diese wieder in M1. Die erforderlichen Restphasenwerte phi innerhalb der projizierten Gitterstreifen können im Falle einer rechteckförmigen Helligkeitsverteilung der Streifen mit einem Fehler von etwa 1 Prozent durch Bildung der Funktion

$$\arctan \{ \, \log^{(-1)} M1 \, \},$$

sonst mittels einer entsprechenden gespeicherten Wertetafel (LUT) berechnet werden.

Wie schon eingangs erwähnt, sind durch die so ermittelten Restphasenwerte phi die Höhen der einzelnen Objektpunkte innerhalb eines Streifens des projizierten Musters bezüglich der Unterkante dieses Streifens bestimmt. Die absoluten Höhen der zu vermessenden Objektpunkte bezüglich einer Referenzebene werden nun aus den Restphasenwerten für mehrere Periodenlängen der Helligkeitsverteilungen auf der Objektoberfläche ermittelt.

Schliessen, wie in Fig. 1 dargestellt, die optischen Achsen 3 und 5 von Projektor 2 und Kamera 4 einen Winkel alpha ein, so sind die für die Höhenmessung wirksamen Periodenlängen lambda gegenüber der Periodenlänge lambda(0) der projizierten Streifenmuster um den Faktor (1/cos(alpha)) vergrössert. Es werde nun vorausgesetzt, dass zwei Streifenmuster mit den wirksamen Periodenlängen lambda(1) und lambda(2) so projiziert werden, dass sie für eine Referenzhöhe des Objektes phasengleich sind, dass lambda(1) >lambda(2), etwa lambda(2) = (p/q)lambda(1), p und q ganze Zahlen, q - p = 1 und dass ein Punkt der Objektoberfläche 1 dann für die beiden Streifenmuster die normierten Restphasen phi(1) bzw. phi(2) habe, wobei

$$0 \leq phi < 1 \; sei.$$

Die gesuchte Absoluthöhe z lässt sich dann darstellen als

$$z \; = \; lambda(1) * \{n(1) \; + \; phi(1)\}$$

oder

$$z \; = \; lambda(2) * \{n(2) \; + \; phi(2)\},$$

wobei n (1) bzw. n (2) ganze Streifen den Punkt von der Referenzhöhe trennen. Mit

$$M(2) =: n(2) - n(1)$$

ist dann

$$z = \text{lambda}(1) * \{ p*M(2)-q*\text{phi}(1)+p*\text{phi}(2) \} + \text{lambda}(1)*\text{phi}(1).$$

Schränkt man den Messbereich für die Objekthöhe ein auf

$$0 \leq n(1) < p \text{ und}$$
$$0 \leq n(2) < q,$$

so ist

```
                    { 0, falls  phi(2) ≥ phi(1)
        M(2) = {
                    { 1, falls  phi(1) > phi(2) .
```

Damit ist die gesuchte Absoluthöhe z vollständig bestimmt. Vergleicht man die Darstellungen für z :

```
   z = lambda(1) * {              n(1) + phi(1)              }, und
   z = lambda(1) * {p*M(2) - q*phi(1) + p*phi(2) + phi(1)},
```

so folgt, weil M(2), p und q ganze Zahlen sind, dass

$$r =: - q*\text{phi}(1) + p*\text{phi}(2)$$

eine ganze Zahl ist, falls die Restphasenwerte phi(1) und phi(2) von Messfehlern frei sind. In praktischen Fällen sind jedoch phi(1) und phi(2) von solchen Fehlern nicht frei, sodass man mittels des gefundenen Wertes r die Messgenauigkeit der verwendeten Restphasenwerte phi(1) und phi(2) überprüfen kann. Zur Berechnung der Anzahl n(1) ganzer Streifen muss dann r auf den nächsten ganzzahligen Wert m(r) gerundet und

$$n(1) = p*M(2) + m(r)$$

berechnet werden. Dies geschieht in einem Host-Computer 19 (Fig.3), der über eine Leitung 21 an den Frame-Grabber 18 angeschlossen ist.

Gegenüber bekannten Vorrichtungen zur Vermessung von Objektoberflächen hat die hier beschriebene folgende Vorteile: Die Bestimmung der Absoluthöhe jedes Punktes der Oberfläche des Objektes 1 erfolgt ohne Kenntnis der Höhen von Nachbarpunkten, die Oberfläche kann daher durch Höhensprünge diskontinuierlich sein, und sie kann auch aus einzelnen nicht zusammenhängenden Teilen bestehen.

Das beschriebene Ausführungsbeispiel erlaubt zahlreiche Varianten und Verwendungsformen. So kann man die Genauigkeit der bestimmten Absoluthöhen z verbessern, indem man zur Ermittlung der Restphasenwerte eine Helligkeitsverteilung mit einer Periodenlänge verwendet, welche wesentlich kleiner ist, als die Periodenlängen der Helligkeitsverteilungen, aus denen bereits die Absoluthöhen z ermittelt wurden. Die Erfindung ist überall dort verwendbar, wo eine Objektoberfläche durch Beleuchtung mit periodischen Mustern vermessen wird, wie bei Interferometern, Interferenzmikroskopen und bei Systemen mit Musterprojektion zur Bestimmung technischer Oberflächen.

**Patentansprüche**

1. Vorrichtung zur Vermessung der Oberfläche (1) eines Objektes mit
   - Mitteln (2, 8, 20) zur Beleuchtung des Objektes mit einem Lichtbündel mit über dessen Querschnitt periodisch variierender Helligkeitsverteilung,
   - Mitteln (16) zur Modulation der Phasen der Helligkeitsverteilung des Lichtbündels zur Beleuchtung an den zu vermessenden Objektpunkten,
   - einer lichtelektrischen Detektoranordnung (4) zur Erfassung und Speicherung der Helligkeitswerte der beleuchteten Objektpunkte für eine Anzahl unterschiedlicher Modulationsphasen und Periodenlängen des Lichtbündels zur Beleuchtung und mit
   - Mitteln (18) zur Verknüpfung der erfassten Helligkeitswerte zur Ermittlung der Restphasenwerte (phi) der beleuchteten Objektpunkte innerhalb der Perioden der Helligkeitsverteilung für definierte Phasenlagen der Verteilungen gegenüber den Mitteln (2) zur Beleuchtung, sowie zur Ermittlung der Höhen (z) der Punkte der Objektoberfläche (1) bezüglich einer Referenzebene, dadurch gekennzeichnet, dass
   - die Mittel zur Beleuchtung und zur Modulation mehrere nebeneinander angeordnete lineare parallele Strichgitter (13, 14, 15) mit unterschiedlichen Periodenlängen umfassen, welche im Lichtbündel auf einem gemeinsamen Träger (8) angeordnet sind, dass
   - auf dem gemeinsamen Träger (8) mindestens eine weitere Teilung (9) angeordnet ist, welche Referenzmarken (10) umfasst und bezüglich welcher die linearen Strichgitter (13, 14, 15) definierte Phasenlagen aufweisen und dass
   - Mittel (16) zur definierten Verschiebung des gemeinsamen Trägers (8) und zur Abtastung (11) der weiteren Teilung (9) vorgesehen sind, welche erlauben, die linearen Strichgitter (13, 14, 15) so im Lichtbündel zu verschieben, dass die entsprechenden Helligkeitsverteilungen bezüglich der Objektoberfläche (1) die definierten Phasenlagen aufweisen.

2. Vorrichtung nach Anspruch 1, dadurch gekennzeichnet, dass
   - eines (15) der auf dem gemeinsamen Träger (8) mit definierten Phasenlagen angeordneten linearen Strichgitter eine Periodenlänge aufweist, welche wesentlich kleiner ist als die Periodenlängen der linearen Strichgitter (13, 14), aus deren Helligkeitsverteilungen die Höhen (z) der Punkte der Objektoberfläche (1) bezüglich einer Referenzebene ermittelt werden, und dass
   - Mittel vorgesehen sind, welche erlauben, aus den zum Strichgitter (15) mit wesentlich kleinerer Periodenlänge gehörigen Restphasenwerten (phi) und den bereits ermittelten Höhen (z) absolute Höhenwerte von erhöhter Genauigkeit zu gewinnen.

3. Vorrichtung nach Anspruch 1, dadurch gekennzeichnet, dass
   - die Detektoranordnung (4) Mittel zur Ausgabe der den jeweiligen Punkten der Objektoberfläche (1) bzw. deren Bildern entsprechenden Helligkeitswerte gemäss einem vorbestimmten Zeitablauf umfasst und dass
   - die Mittel zur definierten Verschiebung des gemeinsamen Trägers (8) einen Schrittmotor (16) nebst Steuerelektronik (17) umfassen, welche den Schrittmotor synchron zum vorbestimmten Zeitablauf derart steuert, dass die Helligkeitswerte der beleuchteten Objektpunkte (1) für eine Anzahl unterschiedlicher Modulationsphasen des Lichtbündels zur Beleuchtung erfasst werden.

**Claims**

1. Device for the measurement of the surface (1) of an object, with
   - means (2, 8, 10) for the illumination of the object by a light beam with a brightness distribution which varies periodically across the cross-section thereof,
   - means (16) for modulation of the phases of the brightness distribution of the light beam for illumination at the object points to be measured,
   - a photo-electric detector arrangement (4) for the detection and storage of the brightness values of the illuminated object points for a number of different modulation phases and period lengths of the light beam for illumination and with
   - means (18) for logical interlinking of the detected brightness values for ascertaining the rest phase values (phi) of the illuminated object points within the periods of the brightness distribution for defined phase positions of the distributions relative to the means (2) for illumination as well as

EP 0 379 079 B2

for ascertaining the heights (z) of the points of the object surface (1) with respect to a reference plane,

characterised thereby, that
- the means for illumination and for modulation comprise several linear parallel line gratings (13, 14, 15) of different period lengths, which gratings are arranged on a common carrier (8) in the light beam and arranged adjacent one another,
- at least one further graduation (9), which comprises reference marks (10) and with respect to which the linear line gratings (13, 14, 15) display defined phase positions, is arranged on the common carrier (8) and that
- means (16) are provided for the defined displacement of the common carrier (8) and for the scanning (11) of the further graduation (g), which means (16) allow the linear line gratings (13, 14, 15) to be so displaced in the light beam that the corresponding brightness distributions display the defined phase positions with respect to the object surface (1).

2. Device according to claim 1, characterised thereby, that
- one (15) of the linear line gratings arranged with defined phase positions on the common carrier (8) displays a period length which is substantially smaller than the period lengths of the linear line gratings (13, 14), from the brightness distributions of which the heights (z) of the points of the object surface (1) with respect to a reference plane are ascertained and that
- means are provided, which permit absolute height values of increased accuracy to be obtained from the already ascertained heights (z) and the rest phase values (phi) belonging to the line grating (15) of substantially smaller period length.

3. Device according to claim 1, characterised thereby, that
- the detector arrangement (4) comprises means for the output of the brightness values, which correspond to the respective points of the object surface (1) or their images, according to a predetermined time sequence and that the means for the defined displacement of the common carrier (8) comprise a stepping motor (16) with an electronic control system (17), which controls the stepping motor in synchronism with the predetermined time sequence in such a manner that the brightness values of the illuminated object points (1) are detected for a number of different modulation phases of the light beam for illumination.

**Revendications**

1. Dispositif pour l'arpentage de la surface (1) d'un objet avec
des moyens (2, 8, 20) pour l'éclairement de l'objet au moyen d'un faisceau lumineux avec une répartition de luminosité variant périodiquement sur sa section transversale,
des moyens (16) pour la modulation de la phase de la répartition de luminosité du faisceau lumineux pour l'éclairement sur les points d'objet à mesurer,
un système détecteur photoélectrique (4) pour la détection et la mémorisation des valeurs de luminosité des points d'objet éclairés pour un certain nombre de phases différentes de modulation et de longueurs de période du faisceau lumineux pour l'éclairement et avec
des moyens (18) pour la combinaison des valeurs détectées de luminosité pour l'obtention des valeurs de phase résiduelle (phi) des points éclairés de l'objet dans les périodes de la répartition de luminosité pour des relations définies de phase des répartitions vis-à-vis des moyens (2) pour l'éclairement, ainsi que pour l'obtention des hauteurs (z) des points de la surface de l'objet par rapport à un plan de référence, caractérisé en ce que
les moyens pour l'éclairement et pour la modulation comportent plusieurs treillis à traits parallèles linéaires agencés côte à côte (13, 14, 15) avec des longueurs différentes de période, qui sont agencés dans le faisceau lumineux sur un support commun (8), que
sur le support commun (8) est agencée au moins une autre graduation (9) qui comporte des marques de référence (10) et par rapport à laquelle les treillis à traits linéaires (13, 14, 15) présentent des relations définies de phase et que
des moyens (16) pour le déplacement défini du support commun (8) et pour l'exploration (11) de l'autre graduation (9) sont prévus, qui permettent de déplacer les treillis à traits linéaires (13, 14, 15) dans le faisceau lumineux de manière que les répartitions de luminosité correspondantes présentent des relations définies de phase par rapport à la surface (1) de l'objet.

7

**2.** Dispositif selon la revendication 1, caractérisé en ce que l'un (15) des treillis à traits linéaires agencés sur le support commun (8) avec des relations définies de phase présente une longueur de période qui est considérablement plus petite que les longueurs de période des treillis à traits linéaires (13, 14) dont on obtient les répartitions de luminosité des hauteurs (z) des points de la surface de l'objet (1) par rapport à un plan de référence et en ce que

des moyens sont prévus qui permettent d'obtenir à partir des valeurs de phase résiduelle (phi) appartenant au treillis à traits (15) ayant une longueur de période considérablement plus petite et des hauteurs déjà obtenues (z), des valeurs de hauteurs absolues d'une plus haute précision.

**3.** Dispositif selon la revendication 1, caractérisé en ce que

l'agencement détecteur (4) comporte des moyens pour donner des valeurs de luminosité correspondant à chaque point de la surface de l'objet (1) ou respectivement à leur image selon une séquence de temps prédéterminée et que

les moyens pour des déplacements définis du support commun (8) comportent un moteur pas à pas (16) avec électronique de commande (17) qui commande le moteur pas à pas en synchronisme avec la séquence temps prédéterminée de manière que les valeurs de luminosité des points de l'objet éclairés (1) soient détectées pour un certain nombre de phases différentes de modulation du faisceau lumineux pour l'éclairement.

FIG. 1

EP 0 379 079 B2

FIG. 2

EP 0 379 079 B2

FIG. 3